# EUROPÄISCHE PATENTSCHRIFT

(11) **EP 4 037 888 B1**
(45) Veröffentlichungstag und Bekanntmachung des Hinweises auf die Patenterteilung: **12.04.2023**
(21) Anmeldenummer: 20780211.7
(22) Anmeldetag: 30.09.2020
(51) Int. Cl.: B29C 51/14, A43B 7/12, A43B 13/12, A43B 23/02, B32B 37/12, B29C 51/00, B29C 51/10, B29L 31/48, B29L 31/50, B29K 105/00

(54) **HERSTELLUNG EINES TIEFGEZOGENEN SEGMENTS**
MANUFACTURING A DEEP-DRAWN SEGMENT
FABRICATION D'UN SEGMENT EMBOUTI

(30) Priorität: 01.10.2019 EP 19200907
(43) Veröffentlichungstag der Anmeldung: 10.08.2022
(73) Patentinhaber: Sympatex Technologies GmbH, 85774 Unterföhring (DE)
(72) Erfinder: MAYERSHOFER, Martin, 86937 Scheuring (DE); MOUHASSIN, Mhamed, 80939 München (DE)
(74) Vertreter: CPW GmbH
(86) Internationale Anmeldenummer: PCT/EP2020/077359
(87) Internationale Veröffentlichungsnummer: WO 2020/249827

(56) Entgegenhaltungen:
- EP-B1- 0 434 934
- EP-B1- 2 444 236
- EP-B1- 2 611 605
- WO-A2-2010/022066
- DE-A1- 3 937 106
- DE-U1-202014 100 250
- US-A- 3 446 686

## Beschreibung

Die Erfindung betrifft ein Verfahren zur Herstellung eines wasserdichten, wasserdampfdurchlässigen und eine dreidimensionale Kontur aufweisenden Segments zur Einbringung in einen Schuhschaft, in ein Kleidungsstück oder in einen Rucksack oder zur Ausbildung dieser Kontur sowie ein solches Segment.

Ein wasserdichter und wasserdampfdurchlässiger Schuhschaft besteht in seiner äußeren Schicht (Obermaterial) typischerweise aus einem wasserdurchlässigen beziehungsweise einem lediglich wasserabweisend ausgerüsteten und luftdurchlässigen Material, beispielsweise aus Leder oder einer Textillage. Damit der Schuhschaft wasserdicht wird, wird eine wasserdichte und wasserdampfdurchlässige Lage, welche zum Beispiel eine monolithische oder poröse Membran sein kann, auf der Innenseite des Obermaterials eingesetzt. Diese wasserdichte und wasserdampfdurchlässige Lage, die im Allgemeinen als "Funktionsschicht" bezeichnet wird, kann von einer oder von beiden Seiten mit einer Schutz- oder Verstärkungslage versehen sein. Der Verbund aus "Funktionsschicht" und Schutz- oder Verstärkungslage wird dann im Allgemeinen als "Funktionslaminat" bezeichnet.

In ganz analoger Weise sind wasserdichte und wasserdampfdurchlässige Ober- und Unterbekleidungen aufgebaut. Die äußere Schicht in z.B. der Oberbekleidung ist oft aus robustem Gewebe und schützt gegen Wind und Wetter.

Nach innen hin folgen in der Regel eine oder mehrere Schichten aus beispielsweise Wolle oder Fleece, die den Körper z. B. gegen Kälte schützen. Damit das Bekleidungsstück wasserdicht wird, ist wiederum als eine der (Innen)-Schichten eine wasserdichte und wasserdampfdurchlässige Lage, welche zum Beispiel eine monolithische oder poröse Membran sein kann, als Funktionsschicht angeordnet. Wie beim Schuh kann die Funktionsschicht auch in Bekleidungsstücken ein- oder beidseitig mit einer Schutz- oder Verstärkungslage versehen, als Funktionslaminat vorhanden sein.

Ein Funktionslaminat wie oben beschrieben kennt man auch aus weiteren textilen Einsatzgebieten, wie z.B. bei Rucksäcken, bei denen der Laminataufbau aus einer weichen Funktionsschicht und einer Schutz- bzw. Verstärkungslage für hohen Tragekomfort und optimale Lastverteilung sorgt.

Dem Fachmann ist eine ganze Reihe von Materialien für Funktionsschichten bekannt. Beispiele für Funktionsschichtmaterialien sind Polyetherester (PEEST), Polyurethane (PU), Polyetheramide (PEA) und Polyhalogenolefine.

Eine besondere Herausforderung ist es dabei, das Funktionslaminat optimal an die Kontur eines Körperteils, z. B. an die Fußform anzupassen.

An dieser Stelle wird darauf hingewiesen, dass im Folgenden die vorliegende Erfindungsbeschreibung nur exemplarisch anhand eines Schuhs erfolgt, die Ausführungsformen aber selbstverständlich nicht als darauf beschränkt aufzufassen sind, sondern auch auf andere Bekleidungsteile (z. B. Jacken, Hosen. Shirts bzw. Teile davon) und Accessoires (z. B. Mützen, Handschuhe, Rucksäcke), die eine optimierte dreidimensionale bzw. eine nahtfreie oder zumindest nahtreduzierte Kontur sinnvoll erscheinen lassen, übertragbar sind, ohne dabei den beabsichtigten Schutzumfang zu verlassen.

Das Funktionslaminat wird daher üblicherweise aus mehreren zweidimensionalen, flächigen Teilen zusammengesetzt, um ein einigermaßen passgenaues dreidimensionales Gebilde zu erhalten. Das dreidimensionale Gebilde ist beispielsweise im Falle eines Schuhs üblicherweise am oberen Ende des Schafts und an der Sohle mit dem Obermaterial verbunden. Da an den Verbindungs- oder Nahtstellen die Wasserdichtigkeit der Funktionsschicht nicht mehr gegeben ist oder zumindest nachlässt, müssen die Verbindungs- oder Nahtstellen in der Regel nachträglich mit einem Nahtversiegelungsband (Tape) abgedichtet werden. Die dem Fachmann bekannten Nahtversiegelungsbänder (Tapes), die die Funktionsschicht im Bereich der Verbindungs- oder Nahtstellen bedecken, sind üblicherweise nicht wasserdampfdurchlässig. Somit wird die zum Abtransport von Feuchtigkeit aus dem Schuhinneren zur Verfügung stehende aktive Oberfläche im Bereich des Schuhschaftes verkleinert und der an und für sich gewünschte Wasserdampfdurchgang in den Bereichen der versiegelten Verbindungs- oder Nahtstellen verhindert und damit der Klimakomfort des Schuhs herabgesetzt.

Darüber hinaus stellen die Arbeitsschritte Nähen oder Fügen von Funktionslaminaten und das anschließende Versiegeln der so erhaltenen Verbindungsstellen bei der Herstellung von dreidimensionalen wasserdichten und gleichzeitig wasserdampfdurchlässigen Schuhen vergleichsweise aufwändige und arbeitsintensive Prozesse dar, die sich häufig in vergleichsweise hohen Fertigungskosten derartiger Schuhe niederschlagen.

Wie bereits weiter oben ausgeführt, gelten die gleichen bzw. analogen Überlegungen auch für andere Anwendungsformen von Funktionslaminaten, wie beispielsweise in den erwähnten Bekleidungsstücken oder Rucksäcken.

Zudem kann das Funktionslaminat durch das notwendige Einbringen von Naht- oder Verbindungsstellen an diesen Stellen geschwächt sein und somit bei Belastung vorzeitig seine Integrität verlieren.

Ein weiteres bekanntes Problem bei Schuhen mit auf diese Weise eingebrachten Funktionslaminaten ist der mangelnde Tragekomfort aufgrund ungenügender Passform. Durch die Zusammensetzung des dreidimensionalen Gebildes aus zweidimensionalen, flächigen Einzelteilen kann nur annähernd die erforderliche dreidimensionale Kontur erreicht werden. Dadurch kann es an Stellen an denen zu viel Material vorhanden ist, zu Faltenbildung und an Stellen mit zu wenig Material zu Druckstellen kommen, wodurch sich der Tragekomfort beispielsweise eines wasserdichten und wasserdampfdurchlässigen Schuhs wesentlich verschlechtern kann.

US 2015/0230553 A1 offenbart eine wasserdichte und wasserdampfdurchlässige Funktionssocke (Bootie) aus expandiertem Polytetrafluorethylen (ePTFE), die zwar nahtlos ist, aber Verbindungsstellen aufweist.

US 2015/0150335 A1 offenbart ein Fußbekleidungssystem mit einer wasserdichten Funktionssocke (Bootie). Diese Funktionssocke (Bootie) wird über ein Gießverfahren hergestellt und ist nicht wasserdampfdurchlässig.

EP 1 212 953 B1 offenbart eine Schuhkonstruktion mit einem Funktionsschichtschaft. Dieser Funktionsschichtschaft ist wasserdicht und wasserdampfdurchlässig und wird durch Beschichten einer dreidimensionalen Fußkontur bzw. eines dreidimensionalen Sockengebildes erhalten. US 2017/0042280 A1 offenbart eine wasserdichte und wasserdampfdurchlässige Funktionssocke (Bootie). Diese Funktionssocke beinhaltet wenigstens eine Textillage und eine nahtlose und dehnbare Funktionsschicht. Die Textillage(n) liegt(-en) dabei als dreidimensionale Socke vor und wird (werden) zusammen mit der Funktionsschicht auf einen Leisten aufgebracht. Diese Lagen werden z. B. mit einem Klebstoff zu einem Funktionslaminat verbunden und anschließend mit Hitze in ihrer Form fixiert. Die so hergestellte Funktionssocke (Bootie) umschließt den ganzen Fuß des Schuhträgers.

Ein Nachteil bei der US 2017/0042280 ist, dass das Funktionslaminat den ganzen Fuß des Schuhträgers, insbesondere den Sohlenteil, umschließt. Somit sind hier bestimmte Techniken zum Verbinden mit einer Sohle, z. B. durch Strobeln oder Zwicken, nicht ohne weiteres möglich.

Ein weiterer Nachteil der US 2017/0042280 besteht darin, dass das Verfahren zur Herstellung einer solchen Funktionssocke (Bootie) durch das sukzessive Aufbringen einzelner Schichten auf den Leisten vergleichsweise umständlich und zeitintensiv ist.

Des Weiteren birgt das in US 2017/0042280 beschriebene Verfahren des sukzessiven Auftragens verschiedener Schichten zur Herstellung einer Funktionssocke (Bootie) die Gefahr der Faltenbildung, die den Tragekomfort des Schuhs einschränken kann.

Das Dokument DE 39 37 106 A1 offenbart ein Verfahren zur Herstellung eines einteiligen nahtlosen Schuhfutterschafts, eines Segments für einen Schuhfutterschaft, ein Kleidungsstück oder einen Rucksack durch die thermische Verformung eines Laminats, wobei das Segment verbindungsstellenfrei ist. Die so hergestellten Schuhfutterschäfte zeigen eine Verarbeitungsschwindung von bis zu 10%. Das in DE 39 37 106 A1 offenbarte Verfahren umfasst die folgenden Schritte: Vorlegen eines Stapels von mindestens einem ersten und einem zweiten aufeinander angeordneten zweidimensionalen Flächengebilde, Vorlegen eines Formkörpers, aufweisend eine dreidimensionale Kontur, Thermoformen des Stapels von mindestens einem ersten und einem zweiten Flächengebilde mittels des Formkörpers unter Erwärmung des Stapels auf eine Prozesstemperatur, wobei die Prozesstemperatur so einzustellen ist, dass eine plastische Verformung des Stapels und eine Laminierung zur flächigen Verbindung der in dem Stapel enthaltenen zweidimensionalen Flächengebilde erhalten wird, wodurch das Segment ausgebildet wird.

Ein Nachteil bei der DE 39 37 106 A1 ist, dass das Laminat, das durch thermische Verformung in eine dreidimensionale Kontur überführt werden soll, in einem vorgelagerten (ggf. mehrstufigen) Prozessschritt durch dem Fachmann bekannte Verfahren des Verbindens der Textillage und der Funktionsschicht, beispielsweise über punkt- oder rasterförmiges Verkleben unter Verwendung reaktiver, feuchtigkeitsvernetzender PU-Hotmeltklebstoffe, hergestellt werden muss. Dadurch können sich der anlagentechnische und logistische Aufwand erhöhen, was sich wiederum negativ auf die Fertigungskosten auswirken kann.

Darüber hinaus besteht bei dem vorgelagerten Laminierschritt insbesondere beim Einsatz hochdehnfähiger Materialien die Gefahr, dass einzelne Materiallagen bereits beim Verbinden unterschiedlich stark gedehnt und diese Dehnungen im Laminatverbund fixiert werden. Im nachgelagerten thermischen Verformungsschritt können sich diese unterschiedlichen Dehnungen u. a. negativ auf die Reproduzierbarkeit der Verformung auswirken

Der vorliegenden Erfindung liegt daher die Aufgabe zu Grunde, ein Verfahren zur Verfügung zu stellen zur Herstellung eines wasserdichten, wasserdampfdurchlässigen dreidimensionalen Segments beispielsweise eines Schuhschaft-Funktionslaminates, womit die Nachteile des Stands der Technik zumindest verringert werden. Darüber hinaus ist die Aufgabe, ein solches dreidimensionales, wasserdichtes und wasserdampfdurchlässiges Segment beispielsweise eines Schuhschaft-Funktionslaminates zur Verfügung zu stellen.

Die erfindungsgemäß gestellte Aufgabe wird durch ein Verfahren zur Herstellung eines wasserdichten, wasserdampfdurchlässigen und eine dreidimensionale Kontur aufweisenden Segments für einen Schuhschaft, ein Kleidungsstück oder einen Rucksack oder zur Ausbildung dieser, wobei das Segment in seiner Oberfläche verbindungsstellenfrei ist, und wobei das Verfahren die folgenden Schritte umfasst:
a. Vorlegen eines Stapels von mindestens einem ersten und einem zweiten aufeinander angeordneten zweidimensionalen Flächengebilde, wobei mindestens zwei im Stapel enthaltene, zueinander benachbarte und direkt aufeinander liegende Flächengebilde nicht miteinander verbunden sind und wobei das erste Flächengebilde eine wasserdichte, wasserdampfdurchlässige Funktionsschicht ausbildet,
b. Vorlegen eines Formkörpers, aufweisend besagte dreidimensionale Kontur,
c. Thermoformen des Stapels von mindestens einem ersten und einem zweiten Flächengebilde mittels des Formkörpers und gleichzeitigem Laminieren der im Stapel enthaltenen Flächengebilde, das zu einer Haftung von mindestens 1,0 N, gemessen nach DIN 53530:1981-02 mit einer Prüflingsbreite von 25 mm, zwischen mindestens einem ersten und einem zweiten aufeinander angeordneten und ursprünglich nicht miteinander verbundenen zweidimensionalen Flächengebilde führt, unter Erwärmung des Stapels auf eine Prozesstemperatur, wobei die Prozesstemperatur so einzustellen ist, dass eine plastische Verformung des Stapels und eine Laminierung zur flächigen Verbindung der in dem Stapel enthaltenen zweidimensionalen Flächengebilde erhalten wird, wodurch das Segment ausgebildet wird.

Das erfindungsgemäße Verfahren weist dabei gegenüber dem Stand der Technik zumindest die Vorteile auf, dass
- das Segment durch einen einfachen Umformungsprozess erhalten werden kann.
- durch die Verwendung von mehreren einzelnen Flächengebilden anstelle eines vorgefertigten Gesamtlaminats auf sonst notwendige vorgelagerte Prozessschritte zur Verbindung / Laminierung einzelner Flächengebilde zumindest teilweise verzichtet werden kann.
- durch die Verwendung von mehreren einzelnen Flächengebilden anstelle eines vorgefertigten Gesamtlaminats auf individuelle Kundenwüsche schneller reagiert werden und ggf. Lagerkapazitäten reduziert werden können, die sonst für verschiedenste Laminatausführungen vorgehalten werden müssen.
- die Materialien in den zweidimensionalen Flächengebilden in der Reihenfolge und/oder in der Auswahl freier kombinierbar sind.
- sich bei dem Verfahren eine maximale Austauschfläche für Wasserdampf ergibt.
- der Tragekomfort durch Vermeidung von Druckstellen durch Nähte und Vermeidung von Falten erhöht wird.
- durch das Dehnen und Verformen der zweidimensionalen Flächengebilde und Funktionsschicht(en) die Atmungsaktivität der einzelnen Materialien bzw. des resultierenden Gesamtlaminats im Vergleich zu einem sonst identisch aufgebauten nicht verformten Gesamtlaminats zunimmt.
- durch das gleichzeitige Verformen und Laminieren der nicht miteinander verbundenen Flächengebilde Elastizitäten und Rückstellkräfte zwischen den Flächengebilden verringert oder gar verhindert werden, womit das herzustellende Segment formstabiler ist als die Segmente des Stands der Technik.

Im Zusammenhang mit der Erfindung werden folgende Begriffe definiert und im Verlaufe der Beschreibung genutzt:
Unter "verbindungsstellenfrei" ist zu verstehen, dass die Oberfläche eines Segments keine Verbindungsstellen die durch Nähen, Schweißen, Verkleben oder sonstige Verbindungsmöglichkeiten, die dem Fachmann bekannt sind, entstanden sind, aufweist.

Unter "plastischer Verformung des Stapels" soll zumindest die plastische Verformung eines Teils, der in dem Stapel enthaltenen zweidimensionalen Flächengebilde bei der im Thermoformschritt eingestellten Prozesstemperatur verstanden werden, sodass nach Abkühlung des Stapels das erhaltene Segment in seiner dreidimensionalen Kontur erfindungsgemäß fixiert wird.

Ein "Segment" kann in einen dreidimensionalen Schuhschaft eingebracht oder zu dessen Fertigung verwendet werden. Darüber hinaus kann ein Segment auch in ein Kleidungsstück oder in einen Rucksack eingebracht werden oder eben diese ausbilden. Sofern das Segment in einen dreidimensionalen Schuhschaft eingebracht wird oder diesen ausbildet, kann das Segment alle zum Fuß gerichteten Bereiche eines Schuhs umfassen. Diese Bereiche können die Sohle unterhalb des Fußes sowie die Teilbereiche der Vorderkappe, des Vorderblatts, des Quartiers und der Hinterkappe umfassen. Diese Teilbereiche, mit Ausnahme der Sohle, werden im Gesamten auch als Innen-Schaft bezeichnet. Auch ist es möglich, dass das Segment nur einen Teil der zum Fuß gerichteten Bereiche umfasst, so z.B. kann der Bereich der Sohle im Segment ausgespart sein. Dabei kann das Segment in einen Schuhschaft eingelegt werden, wobei das Segment jedoch nicht zum Obermaterial (Außen-Schaft) des Schuhs (z.B. Leder) gehört, sondern sich im Inneren des Schuhs im Bereich des Innen-Schafts befindet.

Zudem ist es möglich, dass das Segment neben den zum Fuß gerichteten Flächengebilden (Innen-Schaft) auch das Ober- / Außenmaterial des Schuhschafts umfasst und so zumindest Teile des gesamten Schaftes bildet. Somit kann das Segment nicht nur als Schuhinnenschaft in einen Schuh eingebacht werden, sondern den Schuhschaft gänzlich ausbilden. Das erfindungsgemäße Segment kann den Fuß vollständig umschließen, kann aber auch beispielsweise im Sohlenbereich offen sein, um mit einer geeigneten Sohle verbunden zu werden.

Sofern das Segment in ein Kleidungsstück eingebracht wird, kann dieses die einzelnen zum Körper gerichteten Bestandteile des Kleidungsstückes abbilden. So ist es zum Beispiel möglich, dass das Segment die Form eines Handschuhs nachbildet, wobei die Form die einzelnen Finger, die Handfläche und den Handrücken beinhaltet. Des Weiteren kann das Segment auch ein Kleidungsstück gänzlich ausbilden. Das Segment könnte auch in Socken oder Kopfbedeckungen eingebracht werden, beispielsweise in Hüte, Mützen oder auch Kappen, oder diese gänzlich ausbilden. Dabei kann das Segment die Form der gesamten Kopfbedeckung annehmen oder auch nur Teile davon, beispielsweise bei einer Kappe, wo der Hauptteil, die Krone, das Segment beinhaltet, jedoch nicht das Visier. Des Weiteren weist das erfindungsgemäße Segment eine dreidimensionale Kontur auf und ist somit ein dreidimensionales Segment.

Der im erfindungsgemäßen Verfahren vorgelegte Stapel umfasst mindestens ein erstes und ein zweites aufeinander angeordnetes zweidimensionales Flächengebilde. Die im vorgelegten Stapel enthaltenen Lagen können miteinander laminiert, d.h. miteinander verbunden sein. In jedem Fall enthält der Stapel aber zwei aneinander angeordnete zweidimensionale Flächengebilde, die nicht miteinander verbunden sind. Die zweidimensionalen Flächengebilde, die zueinander benachbart sind und direkt aufeinander liegen sind nicht miteinander verbunden. Der Stapel kann aber auch weitere zweidimensionale Flächengebilde umfassen, die mit einem jeweils benachbarten und direkt aufliegenden Flächengebilde nicht verbunden sind. Letztlich kann der Stapel auch gänzlich aus nicht miteinander verbundenen zweidimensionalen Flächengebilden aufgebaut sein.

Unter "laminieren" wird im Rahmen der vorliegenden Erfindung verstanden, dass im Stapel enthaltene zweidimensionale Flächengebilde flächig miteinander verbunden werden.

Der Ausdruck "flächig verbunden" definiert, dass mindestens zwei zweidimensionale Flächengebilde oder Lagen an ihren sich in ihrer flächigen Erstreckung ausgebildeten Oberflächen miteinander zu einem zweidimensionalen flächigen Laminat verbunden sind. Dabei kann die flächige Verbindung so hergestellt werden, dass die Elemente an ihrer gesamten Oberfläche, also vollflächig, verbunden sind. Die Oberflächen können auch punktuell miteinander verbunden sein, wobei die punktuellen Verbindungen einem Muster unterliegen und zum Beispiel rasterförmig verteilte Klebepunkte sein können.

Der Begriff "Lage" beschreibt eine zweidimensionale Schicht, die als zusammenhängende (kontinuierliche) oder auch als nicht zusammenhängende (diskontinuierliche) Schicht vorliegen kann. Eine zusammenhängende Schicht kann zum Beispiel eine Textillage sein. Eine Schicht, die nicht zusammenhängend ist, kann zum Beispiel als Muster in Form von Klebepunkten, Flock, etc. vorliegen. Dieses Muster kann zum Beispiel auf die dem Fuß abgewandte Seite der Funktionsschicht aufgedruckt sein. In der Textiltechnik wird dies als halbe Lage bezeichnet; in Verbindung mit der Funktionsschicht und einer Textillage, die dem Fuß zugewandt ist, wird es als 2,5 Lagen-Laminat bezeichnet.

Die Begriffe "Bootie" und "Funktionssocke" beschreiben Schuhbauteile, die den Fuß eines Trägers vollständig umschließen.

Der Begriff "Textillage" beschreibt eine Lage, die aus einem Textil besteht. Dieses Textil kann dabei in verschiedenen Formen vorliegen, zum Beispiel in Form eines Gewebes, eines Gewirks, eines Gestricks, eines Vlieses, eines Geflechts, eines Geleges oder eines Filzes.

Der Begriff "Funktionsschicht" beschreibt eine Lage, die mindestens eine Funktion aufweist und zwar mindestens die grundlegenden Funktionen Wasserdichtigkeit und Wasserdampfdurchlässigkeit. Diese Funktionsschicht kann dabei eine Folie, ein Film oder auch eine Membran sein, die gleichzeitig wasserdicht und wasserdampfdurchlässig sind. Bevorzugt besteht die Funktionsschicht aus einem oder mehreren polymeren Materialien, was sowohl hydrophile als auch hydrophobe Polymere, sowie deren Kombination und Gemische beinhaltet.

Im Rahmen der vorliegenden Erfindung werden die Begriffe "polymeres Material" und "Polymere" gleichermaßen und gegeneinander austauschbar verwendet. Dabei ist unter polymerem Material bzw. Polymer ein jegliches synthetisches oder auch natürliches Polymer zu verstehen.

Zu einem "Kleidungsstück" im Sinne der Erfindung gehören Handschuhe, Kopfbedeckungen, Socken, Jacken, Hosen, Westen und dergleichen.

Die zweidimensionalen Flächengebilde der vorliegenden Erfindung können aus einer einzelnen Lage oder Schicht bestehen oder mehrere Lagen oder Schichten aufweisen. Als Lagen oder Schichten kommen Textillagen, Funktionsschichten oder Klebeschichten in Frage. Bei einem Flächengebilde mit mehreren Lagen oder Schichten sind diese Lagen und/oder Schichten miteinander flächig zu einem Vorlaminat verbunden.

In einer bevorzugten Ausführungsform des erfindungsgemäßen Verfahrens, wird das Segment in einen dreidimensionalen Schuhschaft, ein Kleidungsstück oder einen Rucksack eingebracht. Bevorzugte Kleidungsstücke sind Handschuhe, Socken und Kopfbedeckungen wie Hüte, Mützen oder Kappen, Jacken Hosen und Westen. Die Handschuhe können dabei so ausgebildet sein, dass die Finger einzeln von dem Handschuh umschlossen sind, was auch als Fingerhandschuh bezeichnet wird, oder dass der Daumen separat von den anderen Fingern umschlossen ist, was auch als Fäustling bezeichnet wird.

In einer bevorzugten Ausführungsform des erfindungsgemäßen Verfahrens umfasst mindestens ein zweidimensionales Flächengebilde mindestens eine thermoplastische Lage oder enthält zumindest thermoplastische Komponenten.

Eine thermoplastische Lage kann als eigenständiges zweidimensionales Flächengebilde ausgebildet sein oder kann eine Lage innerhalb eines zweidimensionalen Flächengebildes sein, das ein aus mehreren Lagen bestehendes Vorlaminat ist.

Zudem können die thermoplastischen Komponenten in einer bevorzugten Ausführungsform Bestandteile einer Lage eines zweidimensionalen Flächengebildes sein.

Wie ausgeführt, ist wesentlich für das erfindungsgemäße Verfahren, dass der Stapel unter Thermoformen in eine dreidimensionale Form zur Ausbildung des erfindungsgemäßen Segments umgeformt wird und dabei die enthaltenen zweidimensionalen Flächengebilde in ihrer Gesamtheit vollständig miteinander laminiert werden.

Als Thermoformen wird im Rahmen der vorliegenden Erfindung das Umformen eines Stapels von zweidimensionalen Flächengebilden bezeichnet. Dabei kann in dem Stapel mindestens eine thermoplastische Lage enthalten sein. Die mindestens eine thermoplastische Lage kann zum Beispiel eine thermoplastische Folie, ein geeignetes Textil umfassend ein thermoplastisches Material oder auch aus Schmelzklebstoff bestehende Folien oder Vliese sein. Beim Thermoformen werden die zweidimensionalen Flächengebilde auf eine Temperatur erwärmt, die eine plastische Verformung der mindestens einen thermoplastischen Lage erlaubt, und mittels eines starren oder eines während des Thermoformprozesses in sich beweglichen Formkörpers, der eine dreidimensionale Kontur aufweist, in eine dreidimensionale Kontur überführt. Dabei muss gleichzeitig in dem erfindungsgemäßen Verfahren die mindestens eine thermoplastische Lage durch die Erwärmung eine Klebrigkeit entwickeln, sodass diese die in dem Stapel enthaltenen zweidimensionalen Flächengebilde im dreidimensionalen Segment miteinander laminiert bzw. flächig miteinander verbindet.

Bevorzugt umfasst die mindestens eine thermoplastische Lage ein thermoplastisches Material, das eine Schmelztemperatur aufweist von 80 bis 270°C, gemessen nach DIN EN ISO 11357-1 und -3.

Weiter bevorzugt umfasst die mindestens eine thermoplastische Lage ein thermoplastisches Material, das eine Glasübergangstemperatur aufweist von 0 bis 220°C, gemessen nach DIN EN ISO 11357-1 und -3.

In einer bevorzugten Ausführungsform des erfindungsgemäßen Verfahrens umfasst die mindestens eine thermoplastische Lage mindestens ein Material, ausgewählt aus einer Gruppe bestehend aus Polyurethan (PU), Polyolefin (PO), Polyester (PES), Polyetherester (PEEST), Polyacrylnitril (PAN), Polyamid (PA), Polyacrylat (PAC), Polyetherimid (PEI), Polytetrafluorethylen, (PTFE), Polysulfon (PSU), Celluloseacetat (CA) und deren Block- oder statistische Copolymere und / oder deren Mischungen.

Der Formkörper mit dreidimensionaler Kontur kann dabei eine Negativ-Form aufweisen, beispielsweise einen einseitig geöffneten Hohlkörper, oder eine Positiv-Form aufweisen, die als ein vollständiger dreidimensionaler Formkörper oder als Teil davon vorliegen kann.

Das Überführen des Stapels von zweidimensionalen Flächengebilden in die dreidimensionale Kontur und das gleichzeitige Laminieren können in bevorzugten Ausführungsformen des erfindungsgemäßen Verfahrens durch Unterdruck und/oder Druckluft und/oder ein Gegenwerkzeug unterstützt werden. In einer bevorzugten Ausführungsform des Verfahrens mit einer Unterstützung durch Unterdruck, wird der Unterdruck zwischen dem Formkörper und dem Stapel von zweidimensionalen Flächengebilden angelegt.

In einer weiteren erfindungsgemäßen Ausführungsform, wird das Thermoformen durch Anlegen eines Unterdrucks zwischen dem Formkörper und dem Stapel beziehungsweise dem verformten Stapel unterstützt.

Nachdem der Stapel der mindestens zwei zweidimensionalen Flächengebilde in die dreidimensionale Kontur überführt und gleichzeitig laminiert wurde, wird abgekühlt, um so die dreidimensionale Kontur des erhaltenen dreidimensionalen Segments zu fixieren. Die Abkühlung kann auch mittels eines gekühlten Formkörpers erfolgen, beziehungsweise durch diesen unterstützt werden.

Anschließend werden der Formkörper und das erhaltene dreidimensionale Segment voneinander getrennt. Das so erhaltene dreidimensionale Segment kann nachfolgend einer weiteren Verarbeitung zugeführt werden.

Trotz der Fixierung durch die Abkühlung des erhaltenen Segments kann sich die Form aufgrund von Elastizitäten oder Rückstellungen der enthaltenen Materialien noch geringfügig verändern. Eine Veränderung der Form wird im Rahmen des erfindungsgemäßen Verfahrens dann als geringfügig betrachtet, wenn die Abweichung der Kontur des beispielsweise verformten Schuhschaft-Funktionslaminates von der durch die Positiv- oder Negativform vorgegebene Kontur maximal ± 25% beträgt. Dementsprechend gilt das dreidimensionale Segment als formstabil, wenn dieses unter seinem Eigengewicht nur eine Veränderung der vorgegebenen Kontur von maximal ± 25% widerfährt. In dem erfindungsgemäßen Verfahren ist zumindest ein Teil der zweidimensionalen Flächengebilde nicht miteinander verbunden, weshalb die zweidimensionalen Flächengebilde sich während des Verformens im Verfahren mit einer gewissen Freiheit zueinander bewegen können. Ohne an die Theorie gebunden zu sein, wird angenommen, dass dadurch Elastizitäten und Rückstellkräfte reduziert werden und somit eine Veränderung der vorgegebenen Kontur von ± 5% oder weniger erreicht werden können.

Das erfindungsgemäße Verfahren bietet den Vorteil, dass das Thermoformen beispielsweise mit von Rollen abgezogenen zweidimensionalen Flächengebilden, die aus einer oder mehreren Lagen und/oder Schichten aufgebaut sein können, kontinuierlich mit einer gewissen Taktung der einzelnen Verfahrensschritte durchgeführt werden kann.

Es ist natürlich auch möglich, das Verfahren diskontinuierlich durchzuführen.

In einer vorteilhaften Ausführungsform des Verfahrens wird das Thermoformen durch Anlegen eines Unterdrucks zwischen dem Formkörper und dem Stapel beziehungsweise dem verformten Stapel unterstützt.

In einer weiteren bevorzugten Ausführungsform des erfindungsgemäßen Verfahrens umfasst das Thermoformen im Schritt c. die folgenden Teilschritte:
- Einspannen des Stapels in einen Rahmen,
- Erwärmen der in dem Stapel enthaltenen zweidimensionalen Flächengebilde von mindestens einer Seite auf die Prozesstemperatur,
- Ausbilden des Segments und Laminieren der zweidimensionalen Flächengebilde durch Überführen des Stapels in die dreidimensionale Kontur mittels des Formkörpers und Anlegen eines Unterdrucks zwischen dem zweidimensionalen Flächengebilde und dem Formkörper,
- Abkühlen des Segments, um die dreidimensionale Kontur zu fixieren,
- Entfernen des Unterdrucks,
- Entfernen des Formkörpers.

Das Thermoformen kann mit einer geeigneten Thermoformmaschine zum Beispiel von der Fa. Illig oder von der Fa. Kiefel durchgeführt werden.

Bei dem Verfahren des Thermoformens werden die zweidimensionalen Flächengebilde in eine Thermoformmaschine eingebracht und dort zum Beispiel mit Hilfe von Infrarotstrahlern auf eine Prozesstemperatur von 80°C bis 270°C, bevorzugt von 100°C bis 220°C und besonders bevorzugt auf eine Prozesstemperatur von 130°C bis 180°C erwärmt.

Anstelle durch Infrarotstrahler kann das Erwärmen des Stapels durch jede geeignete Methode durchgeführt werden, beispielsweise durch Induktion, Mikrowellenbestrahlung oder durch Heißluft. Bevorzugt ist jedoch das Erwärmen des Stapels mittels Infrarotstrahler.

Bevorzugt wird der Stapel für 5 bis 60 Sekunden erwärmt.

Besonders bevorzugt wird der Stapel von mindestens zwei zweidimensionalen Flächengebilden beidseitig erwärmt. Durch eine beidseitige Erwärmung des Stapels werden die enthaltenen zweidimensionalen Flächengebilde gleichmäßig erwärmt, was zu einer besseren Laminierung und einer besseren Haftung zwischen den Lagen führen kann. Dadurch können die miteinander laminierten zweidimensionalen Flächengebilde eine vorteilhafte Haftung von mindestens 1,0 N aufweisen, wobei die zweidimensionalen Flächengebilde bevorzugter eine Haftung von mindestens 3,0 N, noch bevorzugter von mindestens 3,5 N und besonders bevorzugt von mindestens 4,0 N aufweisen, gemessen nach DIN 53530:1981-02 mit einer Prüflingsbreite von 25 mm. Eine Obergrenze für die Haftung ergibt sich, wenn bei der Prüfung vor einer Trennung der Lagen ein Zerreißen zumindest eines der zweidimensionalen Flächengebilde erfolgt.

Während des Erwärmens oder nach dem Erwärmen kann der erwärmte Stapel nachgespannt werden. Das Nachspannen kann mechanisch durch die Befestigung des Stapels in der Thermoformmaschine geschehen, oder durch Wirkmedien, wie z.B. Druckluft.

Nach dem Erwärmen und gegebenenfalls einem Nachspannen kann in einer Ausführungsform des Verfahrens der Formkörper mit der gewünschten dreidimensionalen Kontur zum Beispiel von unten durch die Ebene des erwärmten Stapels gefahren werden, um so die dreidimensionale Kontur grob vorzugeben.

Daraufhin kann, wie ausgeführt, in einer bevorzugten Ausführungsform des Verfahrens zwischen Formkörper und zweidimensionalem Flächengebilde ein Unterdruck erzeugt werden, damit die gewünschte dreidimensionale Kontur vollständig aus den im Stapel enthaltenen zweidimensionalen Flächengebilden gebildet wird und diese miteinander laminiert werden, um so das Segment eines dreidimensionalen Funktionslaminats zum Beispiel zur Einbringung in einen Schuhschaft, in ein Kleidungsstück oder einen Rucksack oder zur Fertigung eines Schuhschafts zu erhalten.

Bevorzugt erfolgt das Thermoformen mittels des Formkörpers unter einer Verweilzeit des Stapels auf dem Formkörper im Bereich von 1 bis 30 Sekunden.

Bei der Verwendung eines Unterdruckes zwischen dem Formkörper und der zweidimensionalen Flächengebilde, wird ein Druck von 0,001 bis 0,95 bar, bevorzugt ein Druck von höchstens 0,8 bar, weiter bevorzugt ein Druck von höchsten 0,6 bar und besonders bevorzugt ein Druck von höchstens 0,4 bar verwendet.

Anschließend wird vorzugsweise das Segment zur Fixierung der dreidimensionalen Kontur abgekühlt. Das Abkühlen kann durch einen gekühlten Formkörper oder durch eine externe Kühlung, zum Beispiel durch Luft oder andere dem Fachmann bekannte und geeignete Methoden, erreicht werden. Bevorzugt wird das Abkühlen innerhalb von 5 bis 45 Sekunden durchgeführt.

Das Verfahren kann einen nachfolgenden Arbeitsschritt umfassen, bei dem das Segment aus dem umgeformten Flächengebilde ausgeschnitten oder ausgestanzt wird.

Eine bevorzugte Ausführungsform des Verfahrens ist, dass das Thermoformen und Laminieren ein Tiefziehen mit Formwerkzeugen, ein Tiefziehen mit Wirkmedien, ein Tiefziehen mit Wirkenergie oder Kombinationen davon umfasst.

Bei dem Tiefziehen mit Formwerkzeugen kann es sich auch um eine Ausführungsform handeln, bei der ein Formkörper mit dreidimensionaler Kontur zum Beispiel von unten durch die Ebene des Stapels gefahren wird. Um die Verformung zu unterstützen, kann zusätzlich ein Gegenwerkzeug von der dem Formkörper abgewandten Seite des Stapels her auf den Stapel aufgedrückt werden. Dabei hat das Gegenwerkzeug eine dem Formkörper angepasste dreidimensionale Gegenkontur.

Bei dem Tiefziehen mit Wirkmedien wird das Thermoformen durch Wirkmedien wie Druckluft oder auch ein druckreguliertes Flüssigkeitskissen, unterstützt.

Bei dem Tiefziehen durch Wirkenergie kann eine Umformung durch magnetische Kräfte erreicht werden. Dies setzt jedoch voraus, dass elektrisch gut leitende Bleche oder Fäden vorhanden sind.

Eine bevorzugte Ausführungsform des Verfahrens ist, dass beim Thermoformen ein zusätzlicher Druck auf die dem Formkörper abgewandten Oberfläche des Stapels aufgebracht wird, um die Überführung in die dreidimensionale Kontur zu unterstützen.

Dieser zusätzliche Druck kann durch ein Gegenwerkzeug, wie bereits ausgeführt, durch Druckluft oder ein druckreguliertes Flüssigkeitskissen erzeugt werden.

In einer bevorzugten Ausführungsform wird bei der Verwendung eines zusätzlichen Druckes auf der dem Formkörper abgewandten Seite des Stapels ein Druck von 1,5 bis 10 bar, besonders bevorzugt ein Druck von 3 bis 8 bar und weiter bevorzugt ein Druck von 5 bis 7 bar verwendet.

In einer bevorzugten Ausführungsform des erfindungsgemäßen Verfahrens besteht die Funktionsschicht aus einem oder mehreren polymeren Materialien, bevorzugt aus einem oder mehreren thermoplastischen Materialien. Dabei kann die Funktionsschicht aus einer porenfreien Membran, einer mikroporösen Membran oder einer Kombination davon bestehen.

Die wasserdichte und wasserdampfdurchlässige Funktionsschicht weist vorzugsweise eine Dicke von nicht mehr als 200 µm auf und besonders bevorzugt eine Dicke von nicht mehr als 30 µm auf.

Außerdem weist die Funktionsschicht bevorzugt eine Bruchdehnung von mindestens 50% auf. Besonders bevorzugt weist die Funktionsschicht eine Bruchdehnung von mindestens 200% auf.

Vorzugsweise umfasst die wasserdichte und wasserdampfdurchlässige Funktionsschicht mindestens ein Material, ausgewählt aus einer Gruppe bestehend aus Polyurethan (PU), Polyolefin (PO), Polyester (PES), Polyetherester (PEEST), Polyacrylnitril (PAN), Polyamid (PA), Polyetherimid (PEI), Polytetrafluorethylen, (PTFE), Polysulfon (PSU), Celluloseacetat (CA) und deren Block- oder statistische Copolymere und / oder deren Mischungen.

In einer Ausführungsform kann die mikroporöse Membran eine gereckte Polytetrafluorethylen Membran sein. Dabei ist es auch denkbar, dass vor dem Tiefziehen eine nicht gereckte Polytetrafluorethylen-Folie verwendet wird, die durch das Tiefziehen gereckt wird und somit nach dem Tiefziehprozess die Polytetrafluorethylen-Folie mikroporös ist.

In einer weiteren Ausführungsform des erfindungsgemäßen Verfahrens umfasst die Funktionsschicht sowohl eine mikroporöse Membran als auch eine porenfreie Membran. Bevorzugt beinhaltet die mikroporöse Membran ein hydrophobes polymeres Material, zum Beispiel Polytetrafluorethylen, und die porenfreie Membran ein hydrophiles polymeres Material, zum Beispiel ein Polyurethan. Daher kann die Funktionsschicht auch eine Kombination aus einem hydrophoben polymeren Material und einem hydrophilen polymeren Material aufweisen.

In einer bevorzugten Ausführungsform ist die wasserdichte und wasserdampfdurchlässige Funktionsschicht insbesondere aus thermoplastischen Polyurethanen (TPU) oder Polyetherester (PEEST) aufgebaut.

Ein nicht limitierendes Beispiel für eine wasserdichte und wasserdampfdurchlässige Funktionsschicht in Gestalt einer porenfreien Membran ist die Sympatex^{®}-Membran, eine gesundheitlich unbedenkliche und recyclebare Membran bestehend aus Polyetherester (PEEST).

In einer bevorzugten Ausführungsform des erfindungsgemäßen Verfahrens besteht das erste Flächengebilde aus einer Funktionsschicht.

Erfindungsgemäß kann ein zweidimensionales Flächengebilde mehrlagig sein. Bevorzugt weisen die mindestens zwei zweidimensionalen Flächengebilde mindestens eine weitere Lage auf.

Die Funktionsschicht kann innerhalb eines zweidimensionalen Flächengebildes sowohl auf ihrer unteren als auch auf ihrer oberen Seite mit mindestens einer weiteren Lage versehen werden. Diese können bereits vor dem Thermoformen miteinander flächig verbunden sein oder erst beim Thermoformen selbst miteinander flächig verbunden werden. Dabei kann die Funktionsschicht auf ihrer unteren und ihrer oberen Seite gleich viele oder auch unterschiedlich viele weitere Lagen aufweisen. Vorzugsweise handelt es sich bei der mindestens eine weitere Lage um eine Textillage.

Die mindestens eine weitere Lage ist in einer vorteilhaften Ausführungsform eine Textillage, wobei diese Textillage in ihrer flächigen Erstreckung kontinuierlich oder diskontinuierlich aufgebaut sein kann. In einer bevorzugten Ausführungsform ist die Textillage in der Form eines Gewebes, eines Gewirks, eines Gestricks, eines Vlieses, eines Geflechts, eines Geleges oder eines Filzes ausgeführt. Vorzugsweise umfasst der Stapel mindestens eine Textillage.

In einer bevorzugten Ausführungsform des erfindungsgemäßen Verfahrens ist das erste Flächengebilde ein Vorlaminat, umfassend eine Funktionsschicht und mindestens eine weitere Lage, die mittels eines Schmelzklebstoffes oder eines Reaktivklebstoffes verbunden sind, wobei der Klebstoff kontinuierlich oder diskontinuierlich auf die Funktionsschicht und/oder die mindestens eine weitere Lage aufgetragen ist

In einer weiteren bevorzugten Ausführungsform kann die mindestens eine weitere Lage in Form einer Beflockung auf die Funktionsschicht aufgebracht sein. In wiederum einer weiteren bevorzugten Ausführungsform ist die mindestens eine weitere Lage diskontinuierlich ausgeführt und kann beispielsweise ein Muster aufweisen, z.B. aus rasterförmig aufgebrachten Kleberpunkten oder einer rasterförmig aufgebrachten Beflockung beispielsweise in Form von Domänen, wobei die einzelnen Punkte oder Domänen nicht miteinander verbunden sind.

Bevorzugt können die Textillagen unterschiedliche Bereiche aufweisen, die beispielsweise lokale Verstärkungen und/oder unterschiedliche Dehnbarkeiten beinhalten. Die Textillagen können auch anisotrope Bereiche aufweisen, in denen unterschiedlichen Eigenschaften in den Erstreckungsrichtungen der Textillage vorliegen. Diese lokalen Unterschiede und/oder Anisotropien in den Textillagen können zum Beispiel durch bestimmte Webverfahren und Strickverfahren in die Textillagen eingearbeitet werden. Die so erhaltenen unterschiedlichen Bereiche können zum Beispiel als Verstärkungen im Fersenbereich, an der Fußspitze oder den Schnürelementen oder zur Unterstützung der Ausbildung einer möglichst genauen Abformung der gewünschten Formkontur im Thermoformprozess dienen. In einer bevorzugten Ausführungsform des erfindungsgemäßen Verfahrens weist die Textillage Bereiche mit unterschiedlichen Eigenschaften und/oder anisotrope Bereiche auf.

In einer weiteren bevorzugten Ausführungsform des Verfahrens können die Textillagen aus Garnen oder Filamenten aufgebaut sein. Garne können dabei Multfilamentgarne sein, aber auch Garne aus Stapelfasern. Dabei versteht der Fachmann unter Stapelfasern relative kurze Fasern mit einer Länge von 2 bis 200 mm. Filamente dagegen haben eine Länge von mehr als 200 mm, bevorzugt von mehr als 500 mm, noch mehr bevorzugt von mehr als 1000 mm. Filamente können auch praktisch endlos sein, wenn diese zum Beispiel beim Spinnen kontinuierlich durch Spinndüsen extrudiert werden.

Die Garne bzw. Filamente der Textillagen können aus einem einzigen Polymer oder aus mehreren Polymeren bestehen. Im letzteren Fall kann es sich bei den Garnen um Mischgarne handeln, wobei die einzelnen Filamente aus verschiedenen Polymeren bestehen, oder bei den Filamenten um Bi-Komponenten-Filamentgarne handeln, wobei die einzelnen Filamente mehr als ein Polymer aufweisen.

Solche Bi-Komponenten-Filamentgarne beinhalten mehr als ein Polymer in räumlich begrenzter Anordnung zum Beispiel als Seite-an-Seite Modell, Kern-Mantel-Modell oder Insel-in-der-See-Modell.

Eine weitere Ausführungsform des Verfahrens ist, dass die Filamente der Textillagen aus Bi-Komponenten-Filamentgarnen mit dem Kern-Mantel-Modell bestehen, wobei die Schmelztemperatur T_{M,sheath} des Polymers im Mantel geringer ist als die Schmelztemperatur T_{M,core} des Polymers im Kern.

In einer bevorzugten Ausführungsform ist das Material der Textillage ausgewählt aus einer Gruppe von Polymeren, die Polyolefine, Polyester, Polyamide, Polyurethane und Polyacrylnitrile oder einer Kombination daraus umfasst.

Bevorzugt weisen die Polymere eine Glasübergangstemperatur von 20 bis 220°C auf, gemessen nach DIN EN ISO 11357-1 und -3.

Weiter bevorzugt weisen die Polymere eine Schmelztemperatur von 80 bis 270°C auf, gemessen nach DIN EN ISO 11357-1 und -3.

Des Weiteren weisen die zweidimensionalen Flächengebilde in Längs- und in Querrichtung bevorzugt eine Bruchdehnung von 50 bis 360% bei Raumtemperatur auf, gemessen nach DIN EN ISO 13934-1:1999. In einer bevorzugten Ausführungsform des erfindungsgemäßen Verfahrens weisen die zweidimensionalen Flächengebilde in Längs- oder in Querrichtung bevorzugt eine Bruchdehnung von mindestens 50%, bevorzugter von mindestens 100% und noch bevorzugter von mindestens 250% bei Raumtemperatur auf.

Zudem weisen die zweidimensionalen Flächengebilde in Längs- und in Querrichtung bevorzugt eine Zugfestigkeit von 60 bis 1700 N auf, gemessen nach DIN EN ISO 13934-1:1999.

Vorzugsweise kann die Funktionsschicht mit einer der mindestens einen weiteren Lage mittels eines Schmelzklebstoffes oder eines Reaktivklebstoffes verbunden sein beziehungsweise werden, wobei der Klebstoff kontinuierlich oder diskontinuierlich auf die Funktionsschicht und/oder die mindestens eine weitere Lage aufgetragen sein kann.

Es besteht weiterhin die Möglichkeit des Aufbaus einer kontinuierlichen oder diskontinuierlichen Lage bestehend aus Schmelz- oder Reaktivklebstoff, beispielsweise in Form von Vliesen oder anderen Strukturen.

Im Falle der bevorzugten Verwendung von Textillagen können diese einen Schmelzklebstoff oder Reaktivklebstoff umfassen. So können die Textillagen ganz oder teilweise aus einem Schmelzklebstoff oder Reaktivklebstoff bestehen. Dies umfasst, dass das Textillagen aufbauende beziehungsweise ein in den Textillagen enthaltenes Polymer als Reaktivklebstoff oder Schmelzklebstoff wirkt.

In diesem Fall besteht die Möglichkeit der Herstellung einer Verbindung zwischen Funktionsschicht und Textillage durch Überführen dieses Polymers in dessen Erweichungsbereich oder darüber hinaus. Natürlich lässt sich auf diese Weise eine solche Textillage auch mit einer weiteren kontinuierlichen oder diskontinuierlichen Lage verbinden.

In einer Ausführungsform des erfindungsgemäßen Verfahrens ist die mindestens eine weitere Lage eine Textillage, die einen Schmelzklebstoff oder einen Reaktivklebstoff aufweist, mittels dessen die Funktionsschicht und die Textillage flächig miteinander verbunden sind.

Generell kann jedes geeignete Polymer, Copolymer oder Gemisch daraus als Schmelzklebstoff oder Reaktivklebstoff verwendet werden. Bevorzugt wird als Schmelzklebstoff oder Reaktivklebstoff ein Polymer verwendet, das aus einer Gruppe ausgewählt wird, bestehend aus Polyurethan (PU), Polyamid (PA), Polyester (PES), thermoplastisches Polyurethan (TPU), Polyacrylat (PAC) oder deren Block- oder statistische Copolymere und/oder Mischungen daraus.

In einer bevorzugten Ausführungsform des erfindungsgemäßen Verfahrens weisen die Polymere der Reaktivklebstoffe oder der Schmelzklebstoffe eine Schmelztemperatur von 70°C bis 220°C auf, gemessen nach DIN EN ISO 11357-1 und -3.

In einer ebenfalls bevorzugten Ausführungsform weisen die Polymere der Reaktivklebstoffe oder der Schmelzklebstoffe eine Glasübergangstemperatur von 10°C bis 220°C auf, gemessen nach DIN EN ISO 11357-1 und -3.

Das Polymer des Reaktivklebstoffes oder des Schmelzklebstoffes, verwendet zum Verkleben der Lagen in einem Vorlaminat, ist bevorzugt so auszuwählen, dass dieses eine Schmelztemperatur oberhalb der Prozesstemperatur während des Tiefziehens aufweist.

In manchen Fällen ist das Polymer des Reaktivklebstoffes oder des Schmelzklebstoffes, verwendet zum Verkleben der Lagen in einem Vorlaminat, bevorzugt aber auch so auszuwählen, dass dieses eine Schmelztemperatur unterhalb der Prozesstemperatur während des Tiefziehens aufweist. Durch Aufschmelzen des Klebstoffs während des Tiefziehens kann so beispielsweise ein aneinander Abgleiten der ursprünglich im Vorlaminat verbundenen Lagen und eine erneute Verbindung der Lagen nach der Formgebung und nach erfolgter Abkühlung erreicht und so andernfalls ggf. auftretende Spannungen im dreidimensionalen Segment eines Funktionslaminats zumindest reduziert werden.

Das Polymer des Reaktivklebstoffes oder Schmelzklebstoffes, verwendet zum Laminieren der zweidimensionalen Flächengebilde während des Tiefziehens, ist bevorzugt so auszuwählen, dass dieses eine Schmelztemperatur unterhalb der Prozesstemperatur während des Tiefziehens aufweist.

Eine bevorzugte Ausführungsform des Verfahrens ist, dass bei dem Vorlegen des zweidimensionalen Flächengebildes eine Abdeckfolie auf die während des Thermoformens dem Formkörper abgewandte Oberfläche des Stapels gelegt wird, die nach dem Thermoformen entfernt wird.

Die Abdeckfolie kann aus verschiedenen Materialen bestehen, sollte sich jedoch vorzugsweise nach dem Thermoformen rückstandsfrei vom dreidimensionalen Segment entfernen lassen. Außerdem sollte die Abdeckfolie vorzugsweise gut wärmeleitend sein, sowie eine hohe Temperaturbeständigkeit und einen hohen Erweichungstemperaturbereich aufweisen. Des Weiteren sollte die Abdeckfolie gut dehnbar sein und eine Dehnbarkeit von mindestens der gleichen Größenordnung wie die Dehnbarkeit des zweidimensionalen Flächengebildes aufweisen. Ein Beispiel für solche Abdeckfolien sind Silikonfolien.

Die Abdeckfolie kann dazu dienen, den Unterdruck während des Thermoformens aufrecht zu erhalten, d.h. nach außen abzudichten. Dies ist insbesondere beim Einsatz von zusätzlichen Lagen außerhalb einer luftundurchlässigen Funktionsschicht oder bei Verwendung einer luftdurchlässigen mikroporösen Membran als Funktionsschicht von Vorteil. Des Weiteren kann diese Abdeckfolie als Trennfolie dienen, um ein Anhaften der Lagen des zweidimensionalen mehrlagigen Flächengebildes nach dem Thermoformen am Gegenwerkzeug oder am druckregulierten Flüssigkeitskissen zu vermeiden.

In einer weiteren bevorzugten Ausführungsform des Verfahrens wird das Material des Formkörpers ausgewählt aus einer Gruppe, die Holz, Kunststoffe, faserverstärkte Kunststoffe, Polymerharze und Aluminiumgießharze, Gips, Metall, Metalllegierungen, Stahl, Ton, Keramik, Glas, Hartkunststoffe, Messingguss und/oder Kombinationen daraus umfasst.

Besonders bevorzugt wird das Material des Formkörpers ausgewählt aus einer Gruppe, die Holz, Kunststoffe, faserverstärkte Kunststoffe, Polymerharze, Aluminiumgießharze und/oder Kombinationen daraus umfasst.

In einer weiteren vorteilhaften Ausführungsform des Verfahrens hat der Formkörper die gewünschte Schuhinnenkontur oder die gewünschte Hand- oder Mützenkontur, zum Beispiel in Form eines Schuhleistens, einer Hand- oder Kopfform.

Das zuvor beschriebene Verfahren eignet sich besonders zur Herstellung eines wasserdichten und wasserdampfdurchlässigen Segments eines Schuhschaft-Funktionslaminats zur Einbringung in einen Schuhschaft,
wobei das Segment gleichzeitig formstabil, einstückig und in seiner Oberfläche verbindungsstellenfrei ist.

Daher betrifft die Erfindung des Weiteren ein wasserdichtes und wasserdampfdurchlässiges dreidimensionales Segments für einen Schuhschaft, ein Kleidungsstück oder einen Rucksack oder zur Ausbildung dieser, wobei das Segment eine wasserdichte und wasserdampfdurchlässige Funktionsschicht und mindestens eine weitere Lage umfasst, und die Funktionsschicht und/oder die mindestens eine weitere Lage ein thermoplastisches Material umfasst und wobei das Segment unter seinem Eigengewicht formstabil, einstückig und in seiner Oberfläche verbindungsstellenfrei ist, dadurch gekennzeichnet dass das Segment aus einem Stapel von mindestens zwei zweidimensionalen Flächengebilden besteht, die gleichzeitig laminiert und in das dreidimensionale Segment überführt wurden.

In einer bevorzugten Ausführungsform des erfindungsgemäßen Segments bildet dieses den gesamten Schaft aus.

Dieses Segment weist keinerlei Verbindungsstellen in seiner Oberfläche auf. Daher sind die Wasserdichtigkeit und die Wasserdampfdurchlässigkeit über das gesamte Segment gleichermaßen vorhanden, ohne dass es Schwachstellen gibt, die besonders abgedichtet oder verstärkt werden müssen.

Im Übrigen gelten die zuvor zum erfindungsgemäßen Verfahren dargestellten bevorzugten Ausführungsformen beispielsweise hinsichtlich der eingesetzten Materialien, ihrer Eigenschaften oder der Aufbauten der mittels des Verfahrens erhaltenen Segmente entsprechend auch für das erfindungsgemäße wasserdichte und wasserdampfdurchlässige dreidimensionale Segment eines Funktionslaminats.

Außerdem kann das nach dem erfindungsgemäßen Verfahren hergestellte dreidimensionale Segment bzw. das erfindungsgemäße dreidimensionale Segment den gesamten Innen-Schaft sowie den Innen- und Außen-Schaft und damit den gesamten Schaft eines Schuhs umfassen.

Das nach dem erfindungsgemäßen Verfahren hergestellte Segment beziehungsweise das erfindungsgemäße Segment wird bevorzugt mit einer Sohlenkonstruktion versehen. Das nach dem erfindungsgemäßen Verfahren hergestellte Segment beziehungsweise das erfindungsgemäße Segment kann dabei mit den dem Fachmann bekannten Schuhmacharten mit einer Sohlenkonstruktion versehen werden.

Beispielsweise kann das nach dem erfindungsgemäßen Verfahren hergestellte Segment oder das erfindungsgemäße Segment durch ein Fügeverfahren wie das Kleben und/oder das Nähen miteinander verbunden werden. Natürlich sind auch sämtliche andere geeignete Fügeverfahren, wie zum Beispiel das Laserschweißen, Ultraschallschweißen, Hochfrequenzschweißen und Heizkeilschweißen und Kombinationen davon, von der Erfindung umfasst.

Das erfindungsgemäße beziehungsweise das nach dem erfindungsgemäßen Verfahren hergestellte Segment wird bevorzugt an eine Strobelsohle gestrobelt oder an eine Brandsohle gezwickt und mit einem Dichtungsmaterial und/oder durch einen Klebstoff mit einer Sohlenkonstruktion wasserdicht verbunden.

Die Strobel-Machart ist eine Verbindungsart vom Schaft mit der Zwischensohle, vorwiegend zur Fertigung leichter Wander- und Laufschuhe. Der Schaft wird z.B. mit einer textilen Brandsohle aus strapazierfähigem Gewebe durch die so genannte Strobelnaht vernäht. Die Strobelnaht ist eine umlaufende Kettelnaht zwischen Schaft und Brandsohle. Die Sohle wird entweder angeklebt oder angespritzt. Der Kleber bzw. das zum Anspritzen verwendete Material durchdringt die Strobelnaht und dichtet diese ab.

Beim Zwicken wird die Brandsohle an der Unterseite des Leistens befestigt und dann der Schaft inkl. Funktionslaminat über den Leisten gezogen. Die dauerhafte Verbindung zwischen Schaft, Funktionslaminat und Brandsohle erfolgt mit Klebstoffen.

Zudem kann die Sohlenkonstruktion bevorzugt auch mit einer Außensohle durch Direktanspritzen mit einem Polymer wie zum Beispiel Polyurethan, wobei das Polymer das Segment zur Sohlenkonstruktion hin abdichtet, versehen werden.

Beim Anspritzen wird der fertige Schaft inkl. Funktionslaminat in einer Sohlenform positioniert. In dieser Form erfolgt das Anspritzen mit einem geeigneten Polymer / Kunststoff, meistens mit Polyurethan. Die Polymermasse durchdringt die Strobelnaht und dichtet diese ab.

Die Erfindung wird anhand der folgenden Figuren und Beispiele näher erläutert, wobei die Figuren und die Beispiele jedoch nicht einschränkend zu verstehen sind:
FIG. 1A zeigt schematisch einen Querschnitt eines Formkörpers mit einem erfindungsgemäßen dreidimensionalen Segment.
FIG. 1B zeigt eine beispielhafte fotografische Aufnahme einer Seitenansicht eines Formkörpers / Schuhleistens mit einem den Formkörper an seiner Oberseite umschließenden erfindungsgemäßen dreidimensionalen Segment.
FIG. 2 zeigt schematisch einen Querschnitt eines erfindungsgemäßen 2-lagigen Schuhschaft-Funktionslam inats.
FIG. 3 zeigt schematisch einen Querschnitt eines erfindungsgemäßen 3-lagigen Schuhschaft-Funktionslam inats.
FIG. 4A zeigt eine schematische Skizze einer Seitenansicht eines in der Schuhindustrie gängigen Schuhleistens.
FIG. 4B zeigt eine schematische Skizze einer Draufsicht eines in der Schuhindustrie gängigen Schuhleistens.
FIG. 5 zeigt schematisch einen Querschnitt eines mit einer Sohlenkonstruktion verbundenen erfindungsgemäßen dreidimensionalen Segments eines Schuhschaft-Funktionslam inats.
FIG. 6 zeigt schematisch einen Querschnitt eines Schuhs, der ein erfindungsgemäßes dreidimensionales Segment eines Schuhschaft-Funktionslaminats enthält.

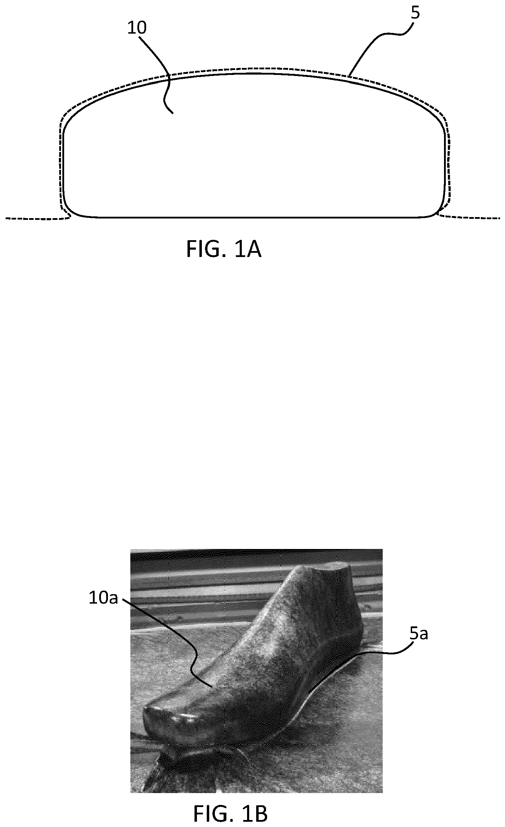

Die FIG. 1A und 1B veranschaulichen schematisch im Querschnitt (FIG. 1A) bzw. anhand einer beispielhaften fotografischen Abbildung (FIG. 1B) das Ergebnis der nach dem erfindungsgemäßen Verfahren durchgeführten Verformung eines zweidimensionalen Flächengebildes zu einem geeigneten dreidimensionalen Segment eines Schuhschaft-Funktionslaminats **5** bzw. **5a** unter Verwendung eines Formkörpers **10** bzw. **10a,** der die dreidimensionale Kontur des Segments **5** bzw. **5a** vorgibt.

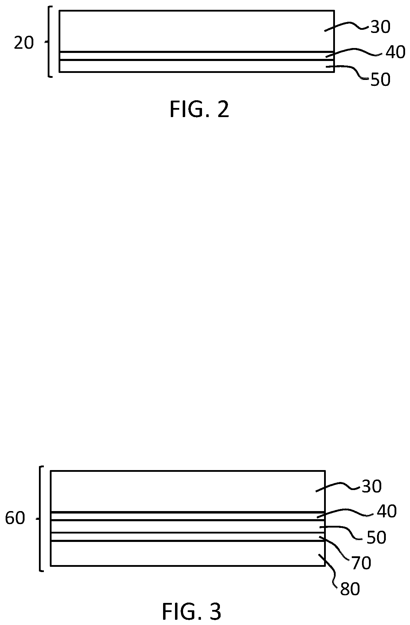

FIG. 2 zeigt schematisch einen Querschnitt eines Ausschnittes eines nach dem erfindungsgemäßen Verfahren verformten und laminierten dreidimensionalen Segmentes **20,** das aus einer Textillage **30,** einer Kleberschicht **40** und einer wasserdichten und wasserdampfdurchlässigen Funktionsschicht **50** aufgebaut ist. In einer vorteilhaften Ausführungsform besteht die Funktionsschicht **50** aus Polyetherester (PEEST), wie z.B. einer Sympatex^{®}-Membran. In einer bevorzugten Ausführungsform kann die Kleberschicht **40** auch ein Vlies sein, das aus Fasern oder Filamenten, die den Klebstoff beinhalten, besteht. Somit kann das Segment in dieser Ausführungsform auch als 3-lagiges Schuhschaft-Funktionslaminat angesehen werden.

Beispielhaft zeigt FIG. 3 schematisch einen Querschnitt eines Ausschnittes eines nach dem erfindungsgemäßen Verfahren verformten und laminierten dreidimensionalen Segmentes **60,** bestehend aus einer ersten Textillage **30,** einer ersten Kleberschicht **40,** einer wasserdichten und wasserdampfdurchlässigen Funktionsschicht **50,** einer zweiten Kleberschicht **70** und einer zweiten Textillage **80**. Dabei können die Textillagen **30** und **80** identisch oder unterschiedlich sein. Analoges gilt unabhängig von den Textillagen auch für die Kleberschichten **40** und **70**. Wie zur FIG. 2 beschrieben, können die Kleberschichten **40** und **70** auch jeweils ein Vlies sein, das aus Fasern oder Filamenten, die den Klebstoff beinhalten, besteht. Somit kann das Segment in dieser Ausführungsform auch als 5-lagiges Schuhschaft-Funktionslaminat angesehen werden

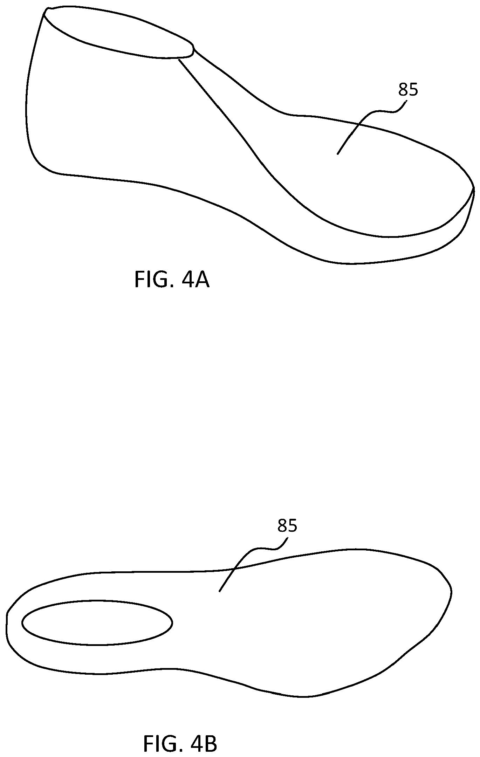

FIG. 4A und 4B zeigen schematisch in einer Seitenansicht beziehungsweise in einer Draufsicht ein dem Fachmann bekanntes Beispiel eines die Fußkontur nachbildenden Schuhleistens **85,** wie er als Formkörper im erfindungsgemäßen Verfahren eingesetzt werden kann.

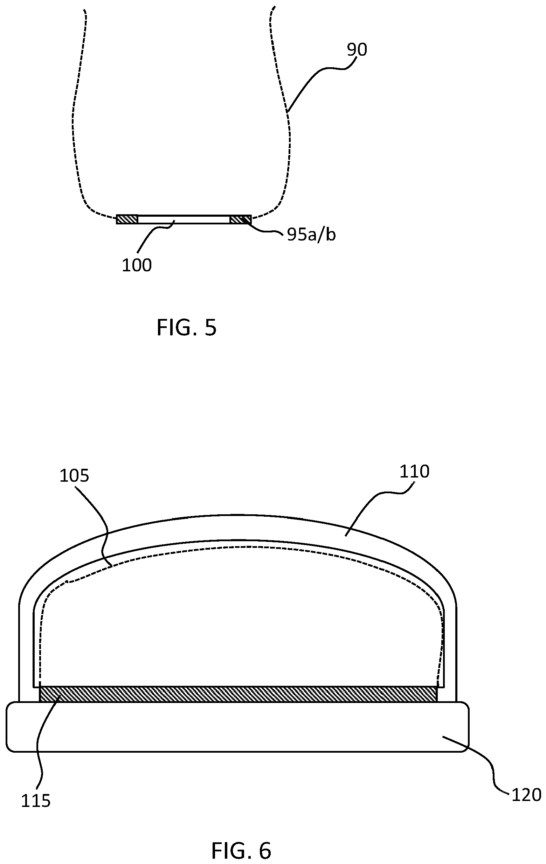

FIG. 5 zeigt schematisch das erfindungsgemäße dreidimensionale Segment eines Schuhschaft-Funktionslaminats **90**, das in einer vorteilhaften Ausführungsform durch Kleben **95a** oder Nähen **95b** mit einer Sohlenkonstruktion **100** verbunden ist.

FIG. 6 zeigt schematisch einen Querschnitt eines erfindungsgemäßen dreidimensionalen Segments eines Schuhschaft-Funktionslaminats **105** in einem wasserdichten und wasserdampfdurchlässigen Schuh mit einem Außenmaterial **110** (z. B. aus Leder), einer angebrachten Sohlenkonstruktion **115** und einer Außensohle **120**. Das nach dem erfindungsgemäßen Verfahren hergestellte Segment bzw. das erfindungsgemäße Segment **105** bildet die Schuhkontur optimal ab, sodass keine oder nur geringe Zwischenräume zwischen Außenmaterial **110** und dem zumindest Teile des Innen-Schafts umfassenden Segment **105** auftreten. Hierdurch kann eine optimale Passform des Schuhs sichergestellt werden.

### Beispiel 1:

Ein Stapel bestehend aus einem Vorlaminat, einer thermoplastischen Kleberschicht und einem Futterstoff, wobei das Vorlaminat aus:
1. einer Wirkware aus 81 Gew.-% Polyethylenterephthalat und 19 Gew.-% Elasthan mit einem Gewicht von 50 g/m²,
2. einem rasterförmig aufgebrachten reaktiven, feuchtigkeitsvernetzenden Kleber aus Polyurethan mit einem Gewicht von ca. 12 g/m²,
3. einer auf einem Polyetherester basierende Sympatex^{®} Membran mit einer Membrandicke von 10 µm,
besteht, die Kleberschicht (Klebevlies) aus einem Vlies eines thermoplastischen Klebers aus Polyurethan mit einem Schmelzbereich von ca. 115°C und einem Gewicht von 20 g/m² aufgebaut ist und der Futterstoff eine Strickware aus Polyester mit einem Gewicht von 265 g/m² ist.

Vorlaminat, Klebevlies und Futterstoff werden von Rollen abgerollt und auf einer Thermoformmaschine (Fa. Illig) so positioniert, dass die Wirkwarenseite des Vorlaminats und der Futterstoff zu den beiden jeweils auf 175°C eingestellten Infrarot-Heizstrahlern der Maschine weisen und der Stapel dort für 16-18 s erhitzt wird. Anschließend wird der aufrechtstehende Leisten im Positivverfahren von unten durch die Ebene des Stapels gefahren. Die Futterstoffseite des Stapels weist dabei zum Leisten hin, die Wirkwarenseite weist vom Leisten weg. Nach Erreichen der Endlage wird zwischen Leisten und Laminat ein Unterdruck erzeugt. Dabei wird der Stapel in ein 3D-Schuhschaft-Funktionslaminat geformt und das Vorlaminat und der Futterstoff werden durch das Klebevlies miteinander verbunden. Nach ca. 15 s Abkühlzeit wird der Unterdruck gelöst, der Leisten wieder nach unten gefahren und das fertige 3D-Schuhschaft-Funktionslaminat aus der Maschine genommen.

Das fertige 3D-Schuhschaft-Funktionslaminat weist eine Haftung von 2,3 N auf, gemessen nach DIN 53530:1981-02 mit einer Prüflingsbreite von 25 mm.

### Beispiel 2:

Beispiel 1 wurde mit der Abänderung wiederholt, dass das Klebevlies nunmehr Bestandteil des Vorlaminats ist. Somit:
Ein Stapel bestehend aus einem Vorlaminat und einem Futterstoff, wobei das Vorlaminat aus:
1. einer Wirkware aus 81 Gew.-% Polyethylenterephthalat und 19 Gew.-% Elasthan mit einem Gewicht von 50 g/m²,
2. einem rasterförmig aufgebrachten reaktiven, feuchtigkeitsvernetzenden Kleber aus Polyurethan mit einem Gewicht von ca. 12 g/m²,
3. einer auf einem Polyetherester basierende Sympatex^{®} Membran mit einer Membrandicke von 10 µm,
4. einem Vlies eines thermoplastischen Klebers (Klebevlies) aus Polyurethan mit einem Schmelzbereich von ca. 115°C und einem Gewicht von 20 g/m², besteht und der Futterstoff eine Strickware aus Polyester mit einem Gewicht von 265 g/m² ist.

Vorlaminat und Futterstoff werden von Rollen abgerollt und auf einer Thermoformmaschine (Fa. Illig) so positioniert, dass die Wirkwarenseite des Vorlaminats zu den beiden jeweils auf 175°C eingestellten Infrarot-Heizstrahlern der Maschine weisen und dort für 16-18 s erhitzt werden. Anschließend wird der aufrechtstehende Leisten im Positivverfahren von unten durch die Ebene des Stapels gefahren. Die Futterstoffseite des Stapels weist dabei zum Leisten hin, die Wirkwarenseite weist vom Leisten weg. Nach Erreichen der Endlage wird zwischen Leisten und Laminat ein Unterdruck erzeugt. Dabei wird der Stapel in ein 3D-Schuhschaft-Funktionslaminat geformt und das Vorlaminat und der Futterstoff werden durch das Klebevlies miteinander verbunden. Nach ca. 15 s Abkühlzeit wird der Unterdruck gelöst, der Leisten wieder nach unten gefahren und das fertige 3D-Schuhschaft-Funktionslaminat aus der Maschine genommen.

Das 3D-Schuhschaft-Funktionslaminat weist eine Haftung von 4,0 N auf, gemessen nach DIN 53530:1981-02 mit einer Prüflingsbreite von 25 mm.

### Beispiel 3:

Beispiel 1 wurde mit der Abänderung wiederholt, dass der Futterstoff aus recyceltem Material hergestellt ist. Somit:
Ein Stapel bestehend aus dem Vorlaminat aus Beispiel 1, einer thermoplastischen Kleberschicht aus Beispiel 1 und einem Futterstoff, der ein Wirkflor aus recyceltem Polyester mit einem Gewicht von 350 g/m² ist.

Vorlaminat, Klebevlies und Futterstoff werden von Rollen abgerollt und auf einer Thermoformmaschine (Fa. Illig) so positioniert, dass die Wirkwarenseite des Vorlaminats und der Futterstoff zu den beiden jeweils auf 165°C eingestellten Infrarot-Heizstrahlern der Maschine weisen und dort für 16-18 s erhitzt werden. Anschließend wird der aufrechtstehende Leisten im Positivverfahren von unten durch die Ebene des Stapels gefahren. Die Futterstoffseite des Stapels weist dabei zum Leisten hin, die Wirkwarenseite weist vom Leisten weg. Nach Erreichen der Endlage wird zwischen Leisten und Laminat ein Unterdruck erzeugt. Dabei wird der Stapel in ein 3D-Schuhschaft-Funktionslaminat geformt und das Vorlaminat und der Futterstoff werden durch das Klebevlies miteinander verbunden. Nach ca. 15 s Abkühlzeit wird der Unterdruck gelöst, der Leisten wieder nach unten gefahren und das fertige 3D-Schuhschaft-Funktionslaminat aus der Maschine genommen.

Das fertige 3D-Schuhschaft-Funktionslaminat weist eine Haftung von 2,1 N auf, gemessen nach DIN 53530:1981-02 mit einer Prüflingsbreite von 25 mm.

### Vergleichsbeispiel 4:

Beispiel 1 wurde mit der Abänderung wiederholt, dass die Klebeschicht nunmehr ein Klebenetz ist. Somit:
Ein Stapel bestehend aus dem Vorlaminat aus Beispiel 1, einer thermoplastischen Kleberschicht aus einem Netz eines thermoplastischen Klebers aus Polyurethan mit einem Schmelzbereich von ca. 110°C und einem Gewicht von 35 g/m² und dem Futterstoff aus Beispiel 1.

Vorlaminat, Klebenetz und Futterstoff werden von Rollen abgerollt und auf einer Thermoformmaschine (Fa. Illig) so positioniert, dass die Wirkwarenseite des Vorlaminats und der Futterstoff zu den beiden jeweils auf 175°C eingestellten Infrarot-Heizstrahlern der Maschine weisen und dort für 16-18 s erhitzt werden. Anschließend wird der aufrechtstehende Leisten im Positivverfahren von unten durch die Ebene des Stapels gefahren. Die Futterstoffseite des Stapels weist dabei zum Leisten hin, die Wirkwarenseite weist vom Leisten weg. Nach Erreichen der Endlage wird zwischen Leisten und Laminat ein Unterdruck erzeugt. Dabei wird der Stapel in ein 3D-Schuhschaft-Funktionslaminat geformt und das Vorlaminat und der Futterstoff werden durch das Klebevlies miteinander verbunden. Nach ca. 15 s Abkühlzeit wird der Unterdruck gelöst, der Leisten wieder nach unten gefahren und das fertige 3D-Schuhschaft-Funktionslaminat aus der Maschine genommen.

Beim fertigen 3D-Schuhschaft-Funktionslaminat kommt es aufgrund einer ungleichmäßigen Verteilung des thermoplastischen Klebers teilweise zu Ablösungen innerhalb des Laminatverbunds. Im Bereich dieser Stellen liegt die Haftung bei < 1,0 N, gemessen nach DIN 53530:1981-02 mit einer Prüflingsbreite von 25 mm.

### Vergleichsbeispiel 5:

Beispiel 1 wurde mit der Abänderung wiederholt, dass das Klebevlies nunmehr einen niedrigeren Schmelzpunkt aufweist. Somit:
Ein Stapel bestehend aus dem Vorlaminat aus Beispiel 1, einer thermoplastischen Kleberschicht aus einem Vlies eines thermoplastischen Klebers (Klebevlies) aus Polyurethan mit einem Schmelzbereich von ca. 50°C und einem Gewicht von 20 g/m² und dem Futterstoff aus Beispiel 1.

Vorlaminat, Klebevlies und Futterstoff werden von Rollen abgerollt und auf einer Thermoformmaschine (Fa. Illig) so positioniert, dass die Wirkwarenseite des Vorlaminats und der Futterstoff zu den beiden jeweils auf 140°C eingestellten Infrarot-Heizstrahlern der Maschine weisen und dort für 16-18 s erhitzt werden. Anschließend wird der aufrechtstehende Leisten im Positivverfahren von unten durch die Ebene des Stapels gefahren. Die Futterstoffseite des Stapels weist dabei zum Leisten hin, die Wirkwarenseite weist vom Leisten weg. Nach Erreichen der Endlage wird zwischen Leisten und Laminat ein Unterdruck erzeugt. Dabei wird der Stapel in ein 3D-Schuhschaft-Funktionslaminat geformt und das Vorlaminat und der Futterstoff werden durch das Klebevlies miteinander verbunden. Nach ca. 15 s Abkühlzeit wird der Unterdruck gelöst, der Leisten wieder nach unten gefahren und das fertige 3D-Schuhschaft-Funktionslaminat aus der Maschine genommen.

Beim fertigen 3D-Schuhschaft-Funktionslaminat kommt es aufgrund einer ungleichmäßigen Verteilung des thermoplastischen Klebers teilweise zu Ablösungen innerhalb des Laminatverbunds. Im Bereich dieser Stellen liegt die Haftung bei < 1,0 N, gemessen nach DIN 53530:1981-02 mit einer Prüflingsbreite von 25 mm.

Die oben beschriebenen Vergleichsbeispiele zeigen, dass das gleichzeitige Verformen und Laminieren im Thermoformprozess entscheidend ist, um die erfindungsgemäß geforderte Haftung zwischen den nicht miteinander verbundenen Flächengebilden im Funktionslaminat zu erreichen.

## Patentansprüche

1. Verfahren zur Herstellung eines wasserdichten, wasserdampfdurchlässigen und eine dreidimensionale Kontur aufweisenden Segments für einen Schuhschaft, ein Kleidungsstück oder einen Rucksack oder zur Ausbildung dieser, wobei das Segment in seiner Oberfläche verbindungsstellenfrei ist, und wobei das Verfahren die folgenden Schritte umfasst:
a. Vorlegen eines Stapels von mindestens einem ersten und einem zweiten aufeinander angeordneten zweidimensionalen Flächengebilde, wobei mindestens zwei im Stapel enthaltene, zueinander benachbarte und direkt aufeinander liegende Flächengebilde nicht miteinander verbunden sind und wobei das erste Flächengebilde eine wasserdichte, wasserdampfdurchlässige Funktionsschicht ausbildet,
b. Vorlegen eines Formkörpers, aufweisend besagte dreidimensionale Kontur,
c. Thermoformen des Stapels von mindestens einem ersten und einem zweiten Flächengebilde mittels des Formkörpers und gleichzeitigem Laminieren der im Stapel enthaltenen Flächengebilde, das zu einer Haftung von mindestens 1,0 N, gemessen nach DIN 53530:1981-02 mit einer Prüflingsbreite von 25 mm, zwischen mindestens einem ersten und einem zweiten aufeinander angeordneten und ursprünglich nicht miteinander verbundenen zweidimensionalen Flächengebilde führt, unter Erwärmung des Stapels auf eine Prozesstemperatur, wobei die Prozesstemperatur so einzustellen ist, dass eine plastische Verformung des Stapels und eine Laminierung zur flächigen Verbindung der in dem Stapel enthaltenen zweidimensionalen Flächengebilde erhalten wird, wodurch das Segment ausgebildet wird.

2. Das Verfahren nach Anspruch 1, wobei mindestens ein zweidimensionales Flächengebilde mindestens eine thermoplastische Lage oder zumindest thermoplastische Komponenten enthält.

3. Das Verfahren nach Anspruch 1 oder 2, wobei das Thermoformen durch Anlegen eines Unterdrucks zwischen dem Formkörper und dem Stapel beziehungsweise dem verformten Stapel unterstützt wird.

4. Das Verfahren nach einem oder mehreren der vorhergehenden Ansprüche, wobei das Thermoformen ein Tiefziehen mit Formwerkzeugen, ein Tiefziehen mit Wirkmedien, ein Tiefziehen mit Wirkenergie oder Kombinationen davon umfasst.

5. Das Verfahren nach einem oder mehreren der vorhergehenden Ansprüche, wobei die Funktionsschicht aus einer porenfreien Membran, einer mikroporösen Membran oder einer Kombination davon besteht.

6. Das Verfahren nach Anspruch 5, wobei die Funktionsschicht mindestens ein Material umfasst, ausgewählt aus einer Gruppe bestehend aus Polyurethan (PU), Polyolefin (PO), Polyester (PES), Polyetherester (PEEST), Polyacrylnitril (PAN), Polyamide (PA), Polyetherimid (PEI), Polytetrafluorethylen, (PTFE), Polysulfon (PSU), Celluloseacetat (CA) und deren Block- oder statistische Copolymere und / oder deren Mischungen.

7. Das Verfahren nach einem oder mehreren der vorhergehenden Ansprüche, wobei der Stapel mindestens eine Textillage umfasst.

8. Das Verfahren nach Anspruch 7, wobei die Textillage Bereiche mit unterschiedlichen Eigenschaften und/oder anisotrope Bereiche aufweist.

9. Das Verfahren nach Ansprüchen 7 und 8 wobei das Material der Textillage ausgewählt wird aus einer Gruppe von Polymeren, die Polyolefine, Polyester, Polyamide, Polyurethane und Polyacrylnitrile oder einer Kombination daraus umfasst.

10. Das Verfahren nach einem oder mehreren der vorhergehenden Ansprüche, wobei das erste Flächengebilde aus einer Funktionsschicht besteht.

11. Das Verfahren nach einem oder mehreren der Ansprüche 1 bis 10, wobei das erste Flächengebilde ein Vorlaminat ist, umfassend eine Funktionsschicht und mindestens eine weiteren Lage, die mittels eines Schmelzklebstoffes oder eines Reaktivklebstoffes verbunden sind, wobei der Klebstoff kontinuierlich oder diskontinuierlich auf die Funktionsschicht und/oder die mindestens eine weitere Lage aufgetragen ist.

12. Das Verfahren nach einem oder mehreren der vorhergehenden Ansprüche, wobei die mindestens eine weitere Lage eine Textillage ist, die einen Schmelzklebstoff oder einen Reaktivklebstoff aufweist, mittels dessen die Funktionsschicht und die Textillage flächig miteinander verbunden sind.

13. Das Verfahren nach einem oder mehreren der vorhergehenden Ansprüche, wobei die zweidimensionalen Flächengebilde in ihren Erstreckungsrichtungen eine Bruchdehnung von mindestens 50% bei Raumtemperatur aufweisen, gemessen nach DIN EN ISO 13934-1:1999.

## Claims

1. Method for manufacturing a water-tight, water vapour-permeable segment having a three-dimensional shape, for a shoe shaft, an item of clothing or a rucksack or for forming the same, the segment being free of connection points at its surface, and wherein the method comprises the following steps:
a. presentation of a stack of at least one first and a second two-dimensional sheet structures arranged one on top of the other, wherein at least two sheet structures contained in the stack adjacent to one another and lying directly on top of one another are not connected to one another and wherein the first sheet structure forms a water-tight, water vapour-permeable functional layer,
b. presentation of a mould body having said three-dimensional shape,
c. thermoforming of the stack of at least a first and a second sheet structure by means of the mould body and simultaneous lamination of the sheet structures contained in the stack, resulting in an adhesion of at least 1.0 N, measured according to DIN 53530:1981-02 with a test piece width of 25 mm, between at least one first and a second two-dimensional sheet structure arranged one on top of the other and not initially connected to one another, with heating of the stack to a process temperature, wherein the process temperature is to be set in such a way that plastic deformation of the stack and lamination for planar connection of the two-dimensional sheet structure contained in the stack is obtained, whereby the segment is formed.

2. The method according to claim 1, wherein at least one two-dimensional sheet structure contains at least one thermoplastic ply or at least thermoplastic components.

3. The method according to claim 1 or 2, wherein thermoforming is assisted by application of a reduced pressure between the mould body and the stack or the deformed stack.

4. The method according to one or more of the preceding claims, wherein the thermoforming comprises deep-drawing with forming tools, deep-drawing with active media, deep-drawing with active energy, or combinations thereof.

5. The method according to one or more of the preceding claims, wherein the functional layer consists of a non-porous membrane, a microporous membrane, or a combination thereof.

6. The method according to claim 5, wherein the functional layer comprises at least one material selected from a group consisting of polyurethane (PU), polyolefin (PO), polyester (PES), polyether ester (PEEST), polyacrylonitrile (PAN), polyamide (PA), polyether imide (PEI), polytetrafluoroethylene, (PTFE), polysulfone (PSU), cellulose acetate (CA) and their block or random copolymers and/or mixtures thereof.

7. The method according to one or more of the preceding claims, wherein the stack comprises at least one textile ply.

8. The method according to claim 7, wherein the textile ply has areas with differing properties and/or anisotropic areas.

9. The method according to claim 7 and 8 wherein the material of the textile ply is selected from a group of polymers comprising polyolefins, polyesters, polyamides, polyurethanes and polyacrylonitriles or a combination thereof.

10. The method according to one or more of the preceding claims, wherein the first sheet structure consists of a functional layer.

11. The method according to one or more of claims 1 to 10, wherein the first sheet structure is a pre-laminate comprising a functional layer and at least one further ply, which are connected by means of a hot-melt adhesive or a reactive adhesive, the adhesive being applied continuously or discontinuously to the functional layer and/or the at least one further ply.

12. The method according to one or more of the preceding claims, wherein the at least one further ply is a textile ply having a hot-melt adhesive or a reactive adhesive, by means of which the functional layer and the textile ply are connected to one another in a planar manner.

13. The method according to one or more of the preceding claims, wherein the two-dimensional sheet structures have an elongation at break of at least 50% in their directions of extension at room temperature, measured according to DIN EN ISO 13934-1:1999.

## Revendications

1. Procédé de fabrication d'un segment étanche à l'eau, perméable à la vapeur d'eau et présentant un contour en trois dimensions pour une empeigne de chaussure, une pièce de vêtement ou un sac à dos ou pour la réalisation de ceux-ci, dans lequel le segment est exempt de point de liaison dans sa surface, et dans lequel le procédé comporte les étapes suivantes consistant à :
a. présenter une pile d'au moins une première et une seconde structure plane en deux dimensions agencées l'une sur l'autre, dans lequel au moins deux structures planes contenues dans la pile, contiguës l'une à l'autre et se trouvant directement l'une sur l'autre ne sont pas reliées entre elles et dans lequel la première structure plane réalise une couche fonctionnelle étanche à l'eau, perméable à la vapeur d'eau,
b. présenter un corps moulé, présentant ledit contour en trois dimensions,
c. thermoformer la pile d'au moins une première et une seconde structure plane au moyen du corps moulé et laminer simultanément la structure plane contenue dans la pile qui mène à une adhérence d'au moins 1,0 N, mesurée selon DIN 53530:1981-02 avec une largeur d'échantillon de 25 mm, entre au moins une première et une seconde structure plane en deux dimensions agencées l'une sur l'autre et non reliées entre elles à l'origine, en chauffant la pile à une température de processus, dans lequel la température de processus est à régler de sorte qu'une déformation plastique de la pile et un laminage pour la liaison plane des structures planes en deux dimensions contenues dans la pile soient obtenues, ce qui permet de réaliser le segment.

2. Procédé selon la revendication 1, dans lequel au moins une structure plane en deux dimensions contient au moins une couche thermoplastique ou au moins des composants thermoplastiques.

3. Procédé selon la revendication 1 ou 2, dans lequel le thermoformage est soutenu par application d'une dépression entre le corps moulé et la pile ou la pile déformée.

4. Procédé selon l'une ou plusieurs quelconques des revendications précédentes, dans lequel le thermoformage comporte un emboutissage avec des outils de formage, un emboutissage avec des agents actifs, un emboutissage avec de l'énergie active ou des combinaisons de ceux-ci.

5. Procédé selon l'une ou plusieurs quelconques des revendications précédentes, dans lequel la couche fonctionnelle se compose d'une membrane exempte de pores, d'une membrane microporeuse ou d'une combinaison de celles-ci.

6. Procédé selon la revendication 5, dans lequel la couche fonctionnelle comporte au moins un matériau, sélectionné à partir d'un groupe se composant de polyuréthane (PU), polyoléfine (PO), polyester (PES), polyétherester (PEEST), polyacrylonitrile (PAN), polyamide (PA), polyétherimide (PEI), polytétrafluoroéthylène (PTFE), polysulfone (PSU), acétate de cellulose (CA) et leurs copolymères de bloc ou statistiques et/ou leurs mélanges.

7. Procédé selon l'une ou plusieurs quelconques des revendications précédentes, dans lequel la pile comporte au moins une couche textile.

8. Procédé selon la revendication 7, dans lequel la couche textile présente des zones avec différentes propriétés et/ou zones anisotropes.

9. Procédé selon les revendications 7 et 8, dans lequel le matériau de la couche textile est sélectionné à partir d'un groupe de polymères qui comporte des polyoléfines, du polyester, du polyamide, du polyuréthane et du polyacrylonitrile ou une combinaison de ceux-ci.

10. Procédé selon l'une ou plusieurs quelconques des revendications précédentes, dans lequel la première structure plane se compose d'une couche fonctionnelle.

11. Procédé selon l'une ou plusieurs quelconques des revendications 1 à 10, dans lequel la première structure plane est un prélaminat, comprenant une couche fonctionnelle et au moins une autre couche qui sont reliées au moyen d'une colle thermofusible ou d'une colle réactive, dans lequel la colle est appliquée en continu ou discontinu sur la couche fonctionnelle et/ou l'au moins une autre couche.

12. Procédé selon l'une ou plusieurs quelconques des revendications précédentes, dans lequel l'au moins une autre couche est une couche textile qui présente une colle thermofusible ou une colle réactive, au moyen de laquelle la couche fonctionnelle et la couche textile sont reliées entre elles de manière plane.

13. Procédé selon l'une ou plusieurs quelconques des revendications précédentes, dans lequel les structures planes en deux dimensions présentent dans leurs sens d'étendue un allongement de rupture d'au moins 50 % à température ambiante, mesurée selon DIN EN ISO 13934-1:1999.
